# EUROPÄISCHE PATENTSCHRIFT

(11) **EP 1 541 649 B1**
(45) Veröffentlichungstag und Bekanntmachung des Hinweises auf die Patenterteilung: **19.09.2012**
(21) Anmeldenummer: 04028095.0
(22) Anmeldetag: 26.11.2004
(51) Int. Cl.: C09D 175/16

(54) **Beschichtungsmittel**
Coating agent
agent de revêtement

(30) Priorität: 09.12.2003 DE 10357713
(43) Veröffentlichungstag der Anmeldung: 15.06.2005
(73) Patentinhaber: Bayer MaterialScience AG, 51368 Leverkusen (DE)
(72) Erfinder: Weikard, Jan, Dr., 51519 Odenthal (DE); Mundstock, Holger, 42929 Wermelskirchen (DE); Schmitz, Jörg, Dr., 51065 Köln (DE)

(56) Entgegenhaltungen:
- WO-A-01/24946
- WO-A-02/079333
- WO-A-03/044111

## Beschreibung

Die vorliegende Erfindung betrifft schnell trocknende, lösemittelhaltige Beschichtungsmittel, deren Herstellung und Verwendung.

Diese Beschichtungsmittel können mit aktinischer Strahlung gehärtet werden und finden insbesondere bei der Autoreparaturlackierung Verwendung. Mit aktinischer Strahlung härtbare Lacke sind als hoch produktive Beschichtungsmittel bekannt. Ein Nachteil dieser Lacke ist insbesondere bei auf Fotopolymerisation von Acrylaten oder Methacrylaten beruhenden Systemen, dass sie nur in den Bereichen der Oberfläche des beschichteten Objekts härten, die mit einer ausreichenden Dosis und Intensität bestrahlt worden sind. Für komplizierter geformte Objekte werden daher bevorzugt sogenannte Dual Cure Beschichtungsmittel eingesetzt, die neben der Fotopolymerisation noch über einen von der Bestrahlung unabhängigen Härtungsmechanismus verfügen, beispielsweise einer Vemetzungsreaktion von Polyisocyanaten mit Polyolen. Letztere verläuft typischerweise bei Raumtemperatur jedoch sehr langsam (>24 h), bei Temperaturen von 130°C innerhalb von etwa 30 min ab. Für einige Anwendungen, insbesondere für die Beschichtung temperaturempfindlicher Gegenstände oder von Gegenständen, die sich aufgrund ihrer Größe und Geometrie nicht wirtschaftlich auf Temperaturen von ca. 130°C aufheizen lassen, ist eine Härtung des Lacks auch ohne Erwärmung und gegebenenfalls ohne Bestrahlung innerhalb kurzer Zeit gefordert, damit auch Raumformen und Teile der zu beschichtenden Körper, welche sich aufgrund ihrer Geometrie einer Belichtung entziehen, mit einer gehärteten Beschichtung versehen werden können.

Insbesondere bei der Reparaturlackierung von Automobilen, aber auch für andere handwerklich vorgenommene Lackierprozesse, gibt es erhebliche Bedenken, ob die typischerweise z.B. in der industriellen Holz/Möbellackierung oder zur Härtung von Druckfarben eingesetzten Quecksilberhoch- und Mitteldruckstrahler aus Kostengründen und Gründen der Arbeitshygiene auch im handwerklichen Bereich eingesetzt werden können. Vielmehr werden hier preiswerte, mobile Strahler mit zumeist auf den als UV-A bezeichneten Bereich des elektromagnetischen Spektrum eingeschränkten Emissionen verwendet, deren Dosis und Intensität wesentlich geringer ist. Es werden daher Beschichtungsmittel gesucht, die eine schnelle Trocknung oder Härtung bei Bestrahlung mit UV-A-Licht auch in nicht oder nicht ausreichend bestrahlten Bereichen zeigen. Darüber hinaus sollte der Anteil an flüchtigen organischen Lösemitteln im verarbeitungsfertigen Beschichtungsmittel beim typischerweise verwendeten Spritzauftrag möglichst gering sein.

Die WO 00/063 015 lehrt die Herstellung einer tiefziehfähigen Verbundfolie, die eine strahlungshärtbare Beschichtung aufweist, in der ein Bindemittel mit einer Glasübergangstemperatur (Tg) von über 40°C enthalten ist. Die verwendeten Beschichtungsmittel weisen sehr hohe Viskositäten auf, eine Spritzapplikation bei Zimmertemperatur wird nicht beschrieben. Die Strahlungshärtung erfolgt mit energiereicher UV-Strahlung oder Elektronenstrahlung, zumeist bei erhöhter Temperatur, eine Härtung ausschließlich mit UV-A-Strahlung wird nicht beschrieben.

Es wurde gefunden, dass lösemittelhaltige Beschichtungsmittel, die bestimmte Urethanacrylate und/oder -methacrylate, im folgenden als Urethan(meth)acrylate bezeichnet, einer hohen Glasübergangstemperatur und vergleichsweise niedrigen Lösungsviskosität enthalten, über eine sehr gute Reaktivität bei Bestrahlung mit UV-A-Licht und eine sehr schnelle Trocknung in nicht bestrahlten Bereichen verfügen.

Gegenstand der Erfindung sind demnach Beschichtungsmittel gemäß Anspruch 1.

Gegenstand der Erfindung ist weiterhin die Herstellung der Beschichtungsmittel und deren Verwendung zur Beschichtung verschiedener Substrate sowie mit den erfindungsgemäßen Beschichtungsmitteln beschichtete Substrate.

Die erfindungsgemäßen Beschichtungsmittel können rein durch die durch Strahlung induzierte radikalische Polymerisation härten oder zusätzlich durch von Strahlung unabhängige Mechanismen wie (Poly)additions- oder eventuell auch Polykondensationsreaktionen vernetzen. Auch eine Härtung durch Einfluss von Sauerstoff ist zusätzlich möglich. Bevorzugt sind solche Vernetzungsmechanismen, die bei niedrigen Temperaturen, insbesondere unter 60°C innerhalb von acht Stunden so weit vollständig ablaufen, dass auch die nicht bestrahlte Beschichtung grifftrocken aushärtet. Insbesondere ist das die Isocyanat-Hydroxyl-Reaktion und die Reaktion von Isocyanat mit aminischen Komponenten. Je nach Vorhandensein und Art des zusätzlichen Vemetzungsmechanismus ist es zweckmäßig, das Beschichtungsmittel in mehreren Komponenten getrennt herzustellen und diese erst kurz vor dem Beschichten zu vereinigen. Oder es kann zweckmäßig sein, mindestens eine chemische Funktionalität, die der Vernetzung ohne Bestrahlung dient, zu maskieren oder zu blockieren. Beispiele sind bestimmte bei tiefen Temperaturen, insbesondere unter 60°C, reagierende blockierte Polyisocyanate (beispielsweise WO 03/004 545) oder maskierte Polyhydroxyverbindungen wie z.B. bestimmte Orthoester- oder Oxazolidinverbindungen wie die in der EP-A 0 882 106 beschriebenen cyclischen Orthoesterverbindungen oder Urethanbisoxazolidine wie z.B. Härter OZ (Bayer AG, Leverkusen, DE), die unter Einfluss von Wasser, insbesondere von Luftfeuchtigkeit zur Reaktion mit Isocyananten befähigte chemische Gruppen freisetzen.

Die erfindungsgemäß eingesetzten amorphen Polyurethane einer Glasübergangstemperatur von 35 bis 100°C, bevorzugt von 40 bis 76°C, insbesondere bevorzugt von 40 bis 52°C sind bevorzugt linear, können aber auch verzweigt sein und können keine weiteren funktionellen Gruppen oder bevorzugt weitere funktionelle Gruppen tragen. Bevorzugte funktionelle Gruppen sind solche, die Bestandteil der chemischen Härtungsmechanismen der erfindungsgemäßen Beschichtungsmittel sind. Insbesondere sind das Hydroxyl-, Isocyanat- und/oder durch aktinische Strahlung polymerisierbare Gruppen wie beispielsweise und bevorzugt (Meth)acrylatgruppen. Besonders bevorzugt sind Polyurethane, die den Festgehalt des mit Lösemittels auf Verarbeitungsviskosität eingestellten Beschichtungsmittels möglichst wenig beeinflussen. Näherungsweise sind das insbesondere solche Polyurethane die eine niedrige Schmelzviskosität aufweisen. Besonders bevorzugte Polyurethane sind in WO 03/044 111 als Bindemittel für UV-härtende Pulverlacke offenbart. Die in dieser Schrift offenbarte Definition von Weichgruppen gilt entsprechend auch für die Polyurethane des erfindungsgemäßen Beschichtungsmittels.

Neben den beschriebenen amorphen Polyurethan können die erfindungsgemäßen Beschichtungsmittel weitere Komponenten enthalten, wobei mindestens eine der Komponenten A2 bis A4 und/oder das amorphe Polyurethan eine oder mehrere funktionelle Gruppen enthalten, die unter Einwirkung aktinischer Strahlung mit ethylenisch ungesättigten Verbindungen unter Polymerisation reagieren:
A1) mindestens einen Photoinitiator,
A2) gegebenenfalls mindestens eine Verbindung, die mindestens eine isocyanatreaktive Gruppe aufweist und gegebenenfalls eine oder mehrere funktionelle Gruppen enthält, die unter Einwirkung aktinischer Strahlung mit ethylenisch ungesättigten Verbindungen unter Polymerisation reagiert,
A3) gegebenenfalls Polyisocyanate, die gegebenenfalls eine oder mehrere funktionelle Gruppen enthalten, die unter Einwirkung aktinischer Strahlung mit ethylenisch ungesättigten Verbindungen unter Polymerisation reagieren
A4) gegebenenfalls Verbindungen, die funktionelle Gruppen tragen, die durch Einwirkung aktinischer Strahlung mit ethylenisch ungesättigten Verbindungen unter Polymerisation reagieren und die weder Isocyanat-Gruppen noch Isocyanat-reaktive Gruppen aufweisen,
A5) gegebenenfalls Katalysatoren und
A6) gegebenenfalls Hilfs- und Zusatzstoffe.

Photoinitiatoren A1 sind durch aktinische Strahlung aktivierbare Initiatoren, die eine radikalische Polymerisation der entsprechenden polymerisierbaren Gruppen auslösen. Fotoinitiatoren, die durch UV-A und/oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind z.B. aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyldiphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Es kann vorteilhaft sein auch Gemische dieser Verbindungen eingesetzt werden. Je nach zur Härtung verwendeter Strahlungsquelle muss Typ und Konzentration an Photoinitiator in dem Fachmann bekannter Weise angepasst werden. Näheres ist zum Beispiel in P. K. T. Oldring (Ed.), Chemistry & Technology of UV & EB Formulations For Coatings, Inks & Paints, Vol. 3, 1991, SITA Technology, London, S. 61 - 328 beschrieben.

Die Verbindungen der Komponente A2) können monomer, oligomer oder polymer sein und enthalten mindestens eine, bevorzugt zwei oder mehr mit Isocyanaten reaktive Gruppen wie beispielsweise Hydroxy-, Amino-, Asparaginato- und oder Thiolgruppen, bevozugt sind Hydroxylgruppen.

Geeignete Verbindungen der Komponente A2) sind niedermolekulare kurzkettige, d.h. 2 bis 20 Kohlenstoffatome enthaltende aliphatische, araliphatische oder cycloaliphatische Diole, Triole und/oder höhere Polyole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Geeignet sind auch höhermolekulare Polyole wie Polyesterpolyole, Polyetherpolyole, hydroxyfunktionelle Acrylharze, hydroxyfunktionelle Polyurethane oder entsprechende Hybride (vgl. Römpp Lexikon Chemie, S.465-466, 10. Aufl. 1998, Georg-Thieme-Verlag, Stuttgart).

Weiterhin können als Verbindungen der Komponente A2) alle Verbindungen einzeln oder in beliebigen Mischungen verwendet werden, die mindestens eine gegenüber Isocyanaten reaktive Gruppe und mindestens eine ungesättigte Funktion aufweisen, die unter Einwirkung aktinischer Strahlung mit ethylenisch ungesättigten Verbindungen unter Polymerisation reagiert.

Bevorzugt werden α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe.

Als hydroxyfunktionelle Acrylate oder Methacrylate kommen beispielsweise in Betracht Verbindungen wie 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)-acrylate, wie z.B. Tone® M100 (Dow, Schwalbach, DE), 2-Hydroxypropyl(meth)acrylat, 4-Hydroxybutyl(meth)acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxiliertes, propoxiliertes oder alkoxyliertes Trimethylolpropan, Glycerin, Pentaerythrit, Dipentaerythrit oder deren technische Gemische.

Darüberhinaus sind isocyanat-reaktive oligomere oder polymere ungesättigte Acrylat- und/oder Methacrylatgruppen enthaltende Verbindungen alleine oder in Kombination mit den vorgenannten monomeren Verbindungen geeignet. Bevorzugt werden dabei hydroxylgruppenhaltige Polyesteracrylate mit einem OH-Gehalt von 30 bis 300 mg KOH/g, bevorzugt 60 bis 200, besonders bevorzugt 70 bis 120 eingesetzt.

Die Herstellung von Polyesteracrylaten wird in der DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123 - 135 beschrieben.

Ebenfalls verwendet werden können die an sich bekannten hydroxylgruppenhaltigen Epoxy(meth)-acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit OH-Gehalten von 20 bis 300 mg KOH/g, bevorzugt von 40 bis 150 mg KOH/g, besonders bevorzugt von 50 bis 100 mg KOH/g oder acrylierte Polyacrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S 37 - 56 beschrieben. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten. Acrylierte Polyacrylate können beispielsweise durch Umsetzung von glycidylfunktionellen Polyacrylaten mit (Meth)acrylsäure hergestellt werden.

Polyisocyanate A3) sind aromatische, araliphatische, aliphatische oder cycloaliphatische Di- oder Polyisocyanate. Es können auch Mischungen solcher Di- oder Polyisocyanate eingesetzt werden. Beispiele geeigneter Di- oder Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, die isomeren Cyclohexandimethylendiisocyanate, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"triisocyanat oder deren Derivate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur und Mischungen derselben. Bevorzugt sind Polyisocyanate auf Basis oligomerisierter und/oder derivatisierter Diisocyanate, die durch geeignete Verfahren möglichst weitgehend von überschüssigem Diisocyanat befreit wurden, insbesondere die des Hexamethylendiisocyanat, Isophorondiisocyanat und der isomeren Bis(4,4'-isocyanatocyclohexyl)methane sowie deren Mischungen. Besonders bevorzugt sind die oligomeren Isocyanurate und Iminooxadiazindione des HDI und deren Mischungen sowie die oligomeren Isocyanurate des IPDI.

Die Polyisocyanate A3) können gegebenenfalls eine oder mehrere funktionelle Gruppen enthalten, die unter Einwirkung aktinischer Strahlung mit ethylenisch ungesättigten Verbindungen unter Polymerisation reagieren. Diese Gruppen können durch Reaktion der unter A2) genannten ungesättigten und isocyanatreaktiven Verbindungen mit gesättigten Polyisocyanaten nach an sich bekannten Methoden wie z.B. der Urethanisierung und/oder der Allophanatisierung hergestellt werden, wobei die monomeren unter A2) genannten ungesättigten und isocyanatreaktiven Verbindungen bevorzugt sind.

Als Verbindungen der Komponente A4) können modifizierte Monomere oder Polymere, die durch Einwirkung aktinischer Strahlung mit ethylenisch ungesättigten Verbindungen unter Polymerisation reagieren, eingesetzt werden. Die Modifizierung erfolgt nach an sich bekannten Methoden. Bei der Modifizierung werden entsprechende chemische Funktionalitäten in die Moleküle eingefügt. Geeignet sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Acrylate und Methacrylate. Beispiele beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, Melaminacrylate, Silikonacrylate, Polycarbonatacrylate und acrylierte Polyacrylate, soweit diese einen Gehalt von Hydroxylgruppen unter 30, bevorzugt unter 20, besonders bevorzugt unter 10 mg KOH/g aufweisen.

Beispielhaft seien die Ester der Acrylsäure oder Methacrylsäure als Bestandteil von A4) genannt, bevorzugt der Acrylsäure, der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobomol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Als Bestandteil von A5) können zur Beschleunigung der Aushärtung der Isocyanate mit den jeweiligen isocyanatreaktiven Verbindungen A2), die in der Isocyanatchemie bekannten Katalysatoren mitverwendet werden. Geeignet sind hierbei bei unblockierten Isocyanaten tertiäre Amine, Zinn-, Zink- oder Wismuthverbindungen, insbesondere Triethylamin, 1,4-Diazabicyclo-[2,2,2]-octan, Zinndioktoat oder Dibutylzinndilaurat.

Die Menge des Katalysators A5) kann durch den Fachmann den Erfordernissen der Aushärtung angepasst werden, wobei insbesondere die Aushärtetemperatur, die erforderliche Härtungsgeschwindigkeit und bei freien Isocyanatgruppen gegebenenfalls die Topfzeit zu berücksichtigen sind. Geeignete Mengen sind z.B. 0,01 bis 2 Gew.%, bevorzugt ist die Verwendung von 0,05 bis 1 Gew.%, besonders bevorzugt ist 0,07 bis 0,6 Gew.% Katalysator auf gesamt Festkörpergehalt.

Als Komponente A6) können in der Technologie der Lacke, Farben, Druckfarben, Dichtstoffe und Klebstoffe übliche Zusätze oder Hilfsmittel enthalten sein.

Weiterhin verwendbare Zusätze sind Stabilisatoren, Lichtschtzmittel wie UV-Absorber und sterisch gehinderte Amine (HALS), insbesondere N-acylierte HALS wie Sanduvor® 3058 (Clariant, Muttenz, CH) oder Tinuvin® 622 (Ciba Speciality Chemicals Holding Inc., Basel, CH) weiterhin Antioxidantien, Füllstoffe sowie Lackhilfsmittel, z.B. Antiabsetzmittel, Entschäumungs- und/oder Netzmittel, Verlaufmittel, Reaktivverdünner, Weichmacher, Katalysatoren, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996

Die Verhältnisse von amorphen Polyurethan, A2), A3) und A4) sind in weiten Grenzen variierbar. Durch einen hohen Anteil des amorphen Polyurethans am Beschichtungsmittel wird die physikalische Trocknung verbessert. Die Härtung in nicht belichteten Bereichen kann zusätzlich durch den weiteren Vernetzungsmechanismus beeinflusst werden. Enthält Komponente A3) viele und gegebenenfalls reaktive Isocyanatgruppen und werden die Mengenverhältnisse der mit Isocyanaten reaktiven Gruppen in A2) und/oder dem amorphen Polyurethan entsprechend - bevorzugt ist ein Verhältnis Isocyanat zu Isocyanat-reaktiven Gruppen von 1:1 - angepasst, so steigt die Vernetzungsdichte und damit die Resistenz im nicht bestrahlten Bereich. Steigt der Anteil an A4) am Beschichtungsmittel, so verschlechtert sich die physikalische Trocknung. In nicht bestrahlten Bereichen verbleibt A4) unvernetzt als Weichmacher. Daher ist bevorzugt die Menge an A4) auf unter 50 Gew.-%, insbesondere unter 25 Gew.-% begrenzt. Der Anteil des amorphen Polyurethans am Beschichtungsmittel beträgt bevorzugt mehr als 20 Gew.-%, insbesondere mehr als 35 Gew.-%.

Die erfindungsgemäßen Beschichtungsmittel können hergestellt werden, indem man zunächst alle Komponenten, die frei von Isocyanatgruppen sind, miteinander vermischt und Komponenten, die freie Isocyanatgruppen enthalten, erst unmittelbar vor der Applikation auf ein Substrat hinzumischt.

Die erfindungsgemäßen Beschichtungsmittel lassen sich durch die üblichen Techniken auf unterschiedlichste Substrate applizieren, wie beispielsweise durch Spritzen, Walzen, Rakeln, Gießen, Sprühen, Streichen, Tränken, Tauchen oder durch Druck-Techniken wie Tief-, Flexo- oder Offsetdruck sowie durch Transfer-Methoden. Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff auch in Form von Folien, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM, und UP (Kurzbezeichnungen nach DIN 7728T1), Papier, Leder, Textilien, Filz, Glas, Holz, Holzwerkstoffe, Kork, anorganisch gebundene Substrate wie Holz- und Faserzementplatten, elektronische Baugruppen oder mineralische Untergründe. Es können auch Substrate, die aus verschiedenen der vorgenannten Materialien bestehen, oder bereits beschichtete Substrate lackiert werden. Es ist auch möglich die Beschichtungsmittel nur temporär auf ein Substrat aufzubringen, dann teilweise oder vollständig zu härten und wieder abzulösen, um z.B. Folien herzustellen.

Bevorzugt werden die erfindungsgemäßen Beschichtungsmittel in Reparaturlackierung insbesondere von Fahrzeugen wie Automobilen, Flugzeugen, Schiffen und Schienenfahrzeugen eingesetzt. Üblicherweise sind die genannten Fahrzeuge mit einer mehrschichtigen Lackierung versehen, wobei jede Schicht aus unterschiedlichen Beschichtungsmitteln zusammengesetzt ist. Wird diese Lackierung beschädigt, so ist es üblich eine Reparaturlackierung vorzunehmen, die ebenfalls aus mehreren Schichten besteht. Die erfindungsgemäßen Beschichtungsmittel können in entsprechenden Formulierungen in jeder Schicht, insbesondere in sogenannten Primern oder Füllern und/oder Klarlacken verwendet werden. Bevorzugt werden bei der Reparaturlackierung ortsbewegliche, insbesondere tragbare UV-Strahler verwendet. Bevorzugt werden solche Strahler, die kein oder kaum UV-C und nur geringe Anteile an UV-B Strahlung emittieren. Solche Strahler sind beispielsweise von der Fa. Dr. K. Hönle GmbH, DE unter der Bezeichnung UVAHAND, von der Fa. Panacol-Elosol GmbH, DE unter der Bezeichnung Panacol H oder Panacol F sowie von der Fa. H+S Autoshot, Kanada erhältlich.

Die applizierten Schichtdicken (vor der Härtung) liegen typischerweise zwischen 0,5 und 5000 µm, bevorzugt zwischen 5 und 1500 µm, besonders bevorzugt zwischen 15 und 1000 µm. Bei Verwendung von Lösungsmitteln wird dieses nach der Applikation durch die gängigen Methoden entfernt.

Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 90 bis 300 keV). Als Strahlungsquellen für Licht oder UV-Licht dienen beispielsweise Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung die oben beschriebenen UV-A-Strahler eingesetzt. Fotoinitiatoren werden dann in Konzentrationen von 0,1 bis 15, besonders bevorzugt 2,0 bis 7,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Enthält das erfindungsgemäße Beschichtungsmittel Isocyanatgruppen (Komponente A3), so härtet es weiterhin durch Einwirkung von thermischer Energie. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen. Im Falle einer Reparaturlackierung sind Infrarotstrahler bevorzugt oder es wird zur Härtung auf den Einsatz einer Wärmequelle verzichtet. Denn gegebenenfalls kann die vorhandene Umgebungswärme zur allmählichen Aushärtung ausreichen, so dass keine zusätzliche thermische Energie in das System eingebracht werden muss. Weiterhin ist eine Reaktion mit vorhandener Luftfeuchtigkeit ebenfalls anteilig möglich.

Da - bei Vorhandensein von Isocyanatgruppen - durch die Einwirkung aktinischer Strahlung und der thermischen Energie/Umgebungswärme zwei unabhängige chemische Mechanismen in Gang gesetzt werden, kann die Reihenfolge aktinische Strahlung/thermische Energie und damit die Reihenfolge, in der die Mechanismen ablaufen, beliebig kombiniert werden. Bevorzugt wird zunächst gegebenenfalls vorhandenes organisches Lösungsmittel und/oder Wasser mit den in der Beschichtungstechnologie üblichen Methoden entfernt. In einer bevorzugten Variante wird anschließend zunächst durch Einwirkung aktinischer Strahlung ganz oder teilweise gehärtet. Unmittelbar danach oder auch später sowie an der räumlich gleichen oder getrennter Stelle kann die thermische Härtung erfolgen.

### Beispiele:

Alle Prozentangaben sind, soweit nicht anders vermerkt, als Gewichtsprozent (Gew.-%) zu verstehen.

Säurezahl: Angabe mg KOH / g Probe, Titration mit 0,1 mol/l NaOH-Lösung gegen Bromthymolblau (ethanolische Lösung), Farbumschlag von gelb über grün nach blau, Grundlage DIN 3682

Hydroxylzahl: Angabe in mg KOH / g Probe, Titration mit 0,1 mol/l meth. KOH-Lösung nach kalter Acetylierung mit Essigsäureanhydrid unter Katalyse von Dimethylaminopyridin,

Isocyanatgehalt: Angabe in %, Rücktitration mit 0,1 mol/l Salzsäure nach Reaktion mit Butylamin, Grundlage DIN EN ISO 11909

Gelpermeationschromatographie (GPC): Elutionsmittel THF, RI-Detektion, Integration nach Eichung mit Polystyrolstandards

Viskositäten: Rotationsviskosimeter, Messungen bei 23°C und 40 s⁻¹ Schergefälle

Glastemperaturen wurden nach DSC (differential scanning caloriemetry) bestimmt, wobei eine Heizrate von 10 K/min verwendet wurde.

### Herstellung von Komponenten für Vergleichsbeispiele:

### Beispiel 1: Glycidylfunktionelles Polyacrylat

Teil 1: In einem Druckkesselreaktor aus V4A-Stahl (Chrom-Nickel Stahl 1.4571) wurden 1200 g Butylacetat vorgelegt und auf 155°C (Innendruck des Reaktors ca. 2,7 bar) aufgeheizt. Innerhalb von 3h wurde dann eine Lösung aus 924,0 g Glycidylmethacrylat, 805,2 g Methylmethacrylat und 818,4 g n-Butylacrylat eindosiert. Gleichzeitig wurde über 3,5 h eine Lösung aus 92,4 g Di-tert.butylperoxid (Peroxan® DB, Pergan GmbH, Bocholt, DE) in 160 g Butylacetat eindosiert. Es wurde eine Stunde weitergerührt, auf 40°C abgekühlt und schließlich über einen Tiefenfilter T5500 (Seitz-Filter-Werke, Bad Kreuznach, DE) filtriert.

Teil 2: In einem Dreihalskolben mit Rückflusskühler, Rührer und Gaseinleitungsrohr wurden 175,9 g des zuvor in Teil 1 erhaltenen Produkts, 18,6 g Acrylsäure, 0,20 g Zinn-2-Ethylhexoat (Desmorapid® SO, Bayer AG Leverkusen, DE), 0,39 g 2,6-Di-tert.-butyl-4-methylphenol, 1,96 mg 2,2,6,6-Tetramethyl-piperidin-1-oxyl und 4,91 g Butylacetat vorgelegt und unter Stickstoffeinleitung auf 90°C erwärmt und für 22h umgesetzt. Es wurde ein Produkt mit einer Viskosität von 670 mPas/23°C bei einem Festgehalt von 66,1%, einer OH-Zahl von 88,7 mg KOH/g und einer Säurezahl von 4,8 mg KOH/g erhalten.

### Beispiel 2: Acryloyl- und hydroxylfunktionelles Polyacrylat

Beispiel 1 wurde wiederholt mit dem Unterschied, dass in Teil 1 1200 g Butylacetat, 636,9 g Glycidylmethacrylat, 1401,1 g Methylmethacrylat, 254,7 g Isobomylmethacrylat und 254,7 g n-Butylacrylat sowie eine Lösung aus 92,6 g Di-tert.-butylperoxid (Peroxan® DB, Pergan GmbH, Bocholt, DE) in 160 g Butylacetat verendet wurden. In Teil 2 wurden dann 928,1 g aus Teil 1, 67,4 g Acrylsäure, 1,84 g Zinn-2-Ethylhexoat (Desmorapid® SO, Bayer AG Leverkusen, DE), 0,60 g 2,6-Di-tert.-butyl-4-methylphenol, 0,12 g 2,5-Di-tert.-butyl-hydrochinon und 1,84 g p-Methoxyphenol und 4,91 g Butylacetat. Es wurde ein Produkt mit einer Viskosität von 20300 mPas/23°C bei einem Festgehalt von 65,2%, einer OH-Zahl von 59 mg KOH/g und einer Säurezahl von 5,7 mg KOH/g erhalten.

Herstellung von Polyurethanen für das erfindungsgemäße Beschichtungsmittel

### Beispiel 3:

Vorstufe: In einem Dreihalskolben mit Rückflusskühler, Rührer und Gaseinleitungsrohr wurden 907,3 g Isophorondiisocyanat (Desmodur® I, Bayer AG, Leverkusen, DE), 0,34 g Dibutylinndilaurat (Desmorapid® Z, Bayer AG Leverkusen, DE), 0,68 g 2,6-Di-tert.-butyl-4-methylphenol, vorgelegt und auf 50°C erwärmt. Anschließend wurden 441,1 g 2-Hydroxypropylacrylat allmählich zudosiert. Mit der stark exothermen Reaktion wurde eine Temperatur zwischen 50 und 65°C eingehalten. Nach Erreichen eines NCO-Gehalts von 14,8 % wurde das Produkt abgekühlt.

Urethanacrylat: In einem Dreihalskolben mit Rückflusskühler, Rührer und Gaseinleitungsrohr wurden 108,1 g der Vorstufe, 0,10 g 2,6-Di-tert.-butyl-4-methylphenol und 40,0 g Butylacetat vorgelegt und auf 70°C erwärmt. Anschließend wurden 11,5 g Ethandiol allmählich zudosiert. Mit der exothermen Reaktion wurde eine Temperatur zwischen 70 und 75°C eingehalten. Nach Erreichen eines NCO-Gehalts von 0,1 % wurde das Produkt abgekühlt. Festgehalt 74,1%, Viskosität 33500 mPas / 23°C, Farbzahl 35 APHA.

### Beispiel 4:

Vorstufe: In einem Dreihalskolben mit Rückflusskühler, Rührer und Gaseinleitungsrohr wurden 1089,0 g Isophorondiisocyanat (Desmodur® I, Bayer AG, Leverkusen, DE), 0,38 g Dibutylinndilaurat (Desmorapid® Z, Bayer AG Leverkusen, DE), 0,75 g 2,6-Di-tert.-butyl-4-methylphenol, vorgelegt und auf 50°C erwärmt. Anschließend wurden 409,1 g 2-Hydroxypropylacrylat allmählich zudosiert. Mit der stark exothermen Reaktion wurde eine Temperatur zwischen 50 und 65°C eingehalten. Nach Erreichen eines NCO-Gehalts von 17,8 % wurde das Produkt abgekühlt.

Urethanacrylat: In einem Dreihalskolben mit Rückflusskühler, Rührer und Gaseinleitungsrohr wurden 669,9 g der Vorstufe, 0,60 g 2,6-Di-tert.-butyl-4-methylphenol und 200,0 g Butylacetat vorgelegt und auf 70°C erwärmt. Anschließend wurden 127,8 g Butandiol allmählich zudosiert. Mit der exothermen Reaktion wurde eine Temperatur zwischen 70 und 75°C eingehalten. Nach Erreichen eines NCO-Gehalts von 0,1 % wurde das Produkt abgekühlt. Festgehalt 73,5%, Viskosität 22000 mPas / 23°C, Farbzahl 38 APHA.

### Beispiel 5:

In einem Dreihalskolben mit Rückflusskühler, Rührer und Gaseinleitungsrohr wurden 669,9 g der Vorstufe aus Beispiel 3, 0,52 g 2,6-Di-tert.-butyl-4-methylphenol und 300,0 g Butylacetat vorgelegt und auf 70°C erwärmt. Anschließend wurden 97,5 g Glycerin allmählich zudosiert. Mit der exothermen Reaktion wurde eine Temperatur zwischen 70 und 75°C eingehalten. Nach Erreichen eines NCO-Gehalts von 0,1 % wurde das Produkt abgekühlt. Festgehalt 72,2%, Viskosität 64000 mPas / 23°C, Farbzahl 37 APHA, Hydroxylzahl 62 mg/g KOH.

Herstellung von erfindungsgemäßen Beschichtungsmitteln sowie von Beschichtungsmitteln zum Vergleich und Beschichtungen daraus

| | **Vergleich** | | | | **Erfindungsgemäß** | | | |
|---|---|---|---|---|---|---|---|---|
| **Beispiel** | **6** | **7** | **8** | **9** | **10** | **11** | **12** | **13** |
| Produkt Bsp. 1 | 50,0 | | 50,0 | | | | | |
| Produkt Bsp. 2 | | 50,0 | | 50,0 | | | | |
| Produkt Bsp. 3 | | | | | | | 100,0 | |
| Produkt Bsp. 4 | | | | | | | | 100,0 |
| Produkt Bsp. 5 | | | | | 50,0 | 50,0 | | |
| PETIA | | | | | | | 18,5 | 18,5 |
| Photoinitiator | 4,8 | 4,3 | 7,6 | 6,1 | 4,7 | 6,6 | 10,5 | 10,5 |
| DBTL | 2,4 | 2,2 | 3,8 | 3,1 | 2,3 | 3,3 | 5,3 | 5,3 |
| Ethylacetat | 10,0 | 25,0 | 19,9 | 34,9 | 20,0 | 27,6 | 50,0 | 48,0 |
| N3390 | 15,9 | 11,4 | | | 12,1 | | | |
| XP 2510 | | | 46,2 | 33,2 | | 35,1 | | |
| LS 2337 | | | | | | | 12,7 | 12,7 |

| | | | | | | | | |
|---|---|---|---|---|---|---|---|---|
| Alle Angaben in [g]. | | | | | | | | |

PETIA ist das technische Umsetzungsprodukt von Pentaerythrit mit Acrylsäure, hydroxylgruppenhaltig der Fa. UCB, S.A., BE.

Als Photoinitiator wurde eine Mischung eines alpha-Hydroxyketons (Irgacure® 184, Ciba Speciality Chemicals, Basel, CH) mit einem mono-Acylphosphinoxid (Lucerin® TPO, BASF AG, Ludwigshafen, DE) im Gewichtsverhältnis 3:1, 50 %ig gelöst in Ethylacetat verwendet.

DBTL steht für die 1%ige Lösung von Dibutylzinndilaurat (KEVER-KAT DBTL 162, Kever-Technologie GmbH & Co KG, Ratingen, DE) in Ethylacetat.

N3390 steht für Desmodur® N3390 (Bayer AG, Leverkusen, DE) - aliphatisches Polyisccyanat auf Basis von Hexamethylendiisocyanat mit vorwiegend Isocyanuratstruktureinheiten, 90%ig in Butylacetat, NCO-Gehalt 19,6%, Viskosität 650 mPas/23°C.

XP 2510 steht für Roskydal® UA XP 2510 (Bayer AG, Leverkusen, DE) - isocyanathaltiges Urethanacrylat, 90%ig in Butylacetat, NCO-Gehalt 6,7%, Viskosität 16000 mPas/23°C

LS 2337 steht für Roskydal® UA VP LS 2337 (Bayer AG, Leverkusen, DE) - isocyanathaltiges Urethanacrylat, 100%ig, NCO-Gehalt 12,5%, Viskosität 10000 mPas/23°C.

Zur Herstellung der Beschichtungsmittel wurden zunächst alle nicht isocyanathaltigen Komponenten miteinander homogen vermischt. Unmittelbar vor der Applikation wurden dann jeweils die isocyanathaltigen Bestandteile eingerührt. Die fertig formulierten Lacke wurden dann mit einem 150 µm Rakel auf Glasplatten aufgezogen.

| | **Vergleich** | | | | **Erfindungsgemäß** | | | |
|---|---|---|---|---|---|---|---|---|
| **Beispiel** | **6** | **7** | **8** | **9** | **10** | **11** | **12** | **13** |
| Beschichtungsmittel | | | | | | | | |
| Rechnerischer Festkörper [%] | 60,4 | 48,4 | 60,4 | 50,4 | 55,2 | 56,7 | 56,1 | 56,6 |
| Auslaufzeit DIN4-Becher [s] | 20 | 20 | 20 | 20 | 20 | 20 | 20 | 20 |

| Beschichtung nach Antrocknung ohne UV-Bestrahlung | | | | | | | | |
|---|---|---|---|---|---|---|---|---|
| Trocknung T1 (DIN 53150) [min] | 50 | 25 | 140 | 60 | 30 | 25 | 85 | 120 |
| Trocknung T3 (DIN 53150) [min] | 300 | 330 | >480 | >480 | 210 | >480 | >480 | >480 |

| Beschichtung nach 15 min Antrocknung und UV-Bestrahlung | | | | | | | | |
|---|---|---|---|---|---|---|---|---|
| UV-Härtung 2 min | Klebrig | Weich | Klebrig | Klebrig | Weich | Hart | Hart | Hart |
| UV-Härtung 5 min | Weich | Hart | Weich | Hart | Hart | Hart | Hart | Hart |
| Schichtdicke nach Härtung [µm] | 35 | 35 | 40 | 35 | 35 | 35 | 45 | 45 |
| Pendelhärte nach 2 h RT [s] | 53 | 76 | 53 | 80 | 122 | 165 | 157 | 165 |
| Pendelhärte nach 96 h RT [s] | 153 | 167 | 135 | 148 | 190 | 197 | 181 | 187 |

Die UV-Härtung erfolgt nach 15 min Ablüften bei RT mit einer UVA-Lampe Panacol UV-F 900 der Fa. Panacol-Elosol GmbH, DE durch Bestrahlen von 2 min bzw. 5 min aus einer Entfernung von 20 cm.

Anschließend wurde die Schichtdicke an der 5 min bestrahlten Probe mit einem Messgerät DeFelsko 6000, DeFelsko Corporation, New York, USA vermessen.

Nur die erfindungsgemäßen Bindemittel erfüllen alle Anforderungen: hoher Festgehalt (über 55% bei Spritzviskosität eines Klarlacks), gute physikalische Antrocknung z.B. in Schattenbereichen (T1-Trocknung in 120 min), hohe UV-Reaktivität unter reinem UV-A-Licht (UV-Härtung in 2 bis 5 min) und eine zügige Nachhärtung (spätestens 2 h nach Bestrahlung ist die Pendelhärte über 120 s). Die Bindemittel des Vergleichs verfehlen diese Anforderung immer in mindestens zwei geprüften Eigenschaften.

## Patentansprüche

1. Durch UV-A-Strahlung härtbare Beschichtungsmittel, die mindestens ein amorphes Polyurethan einer Glasübergangstemperatur von 35 bis 100°C enthalten, das einen Gewichtsanteil an Weichgruppen von weniger als 30 Gew.-% aufweist, und neben der fotochemischen Vernetzung durch einen weiteren Vernetzungsmechanismus aushärtbar sind, der insbesondere bei Temperaturen unterhalb von 60°C innerhalb von acht Stunden so weit vollständig abläuft, dass auch die nicht bestrahlte Beschichtung grifftrocken aushärtet,
**dadurch gekennzeichnet, dass** sie als weitere Komponenten
A1) mindestens einen Photoinitiator,
A2) gegebenenfalls mindestens eine Verbindung, die mindestens eine isocyanatreaktive Gruppe aufweist und gegebenenfalls eine oder mehrere funktionelle Gruppen enthält, die unter Einwirkung aktinischer Strahlung mit ethylenisch ungesättigten Verbindungen unter Polymerisation reagiert,
A3) gegebenenfalls Polyisocyanate, die gegebenenfalls eine oder mehrere funktionelle Gruppen enthalten, die unter Einwirkung aktinischer Strahlung mit ethylenisch ungesättigten Verbindungen unter Polymerisation reagieren
A4) gegebenenfalls Verbindungen, die funktionelle Gruppen tragen, die durch Einwirkung aktinischer Strahlung mit ethylenisch ungesättigten Verbindungen unter Polymerisation reagieren und die weder Isocyanat-Gruppen noch Isocyanat-reaktive Gruppen aufweisen,
A5) gegebenenfalls Katalysatoren und
A6) gegebenenfalls Hilfs- und Zusatzstoffe
enthalten, wobei mindestens eine der Komponenten A2 bis A4 und/oder das amorphe Polyurethan eine oder mehrere funktionelle Gruppen enthalten, die unter Einwirkung aktinischer Strahlung mit ethylenisch ungesättigten Verbindungen unter Polymerisation reagieren.

2. Beschichtungsmittel gemäß Anspruch 1, **dadurch gekennzeichnet, dass** die amorphen Polyurethane eine Glasübergangstemperatur von 40 bis 76°C aufweisen.

3. Beschichtungsmittel gemäß Anspruch 1, **dadurch gekennzeichnet, dass** die amorphen Polyurethane eine Glasübergangstemperatur von 40 bis 52°C aufweisen.

4. Beschichtungsmittel gemäß Ansprüchen 1 bis 3, **dadurch gekennzeichnet, dass** die amorphen Polyurethane eine lineare molekulare Struktur haben.

5. Beschichtungsmittel gemäß Ansprüchen 1 bis 4, **dadurch gekennzeichnet, dass** der weitere Vernetzungsmechanismus auf der Isocyanat-Hydroxyl-Reaktion oder die Reaktion von Isocyanat mit aminischen Komponenten oder beiden Reaktionstypen gleichzeitig beruht.

6. Verfahren zur Herstellung von Beschichtungsmitteln gemäß Ansprüchen 1 bis 5, **dadurch gekennzeichnet, dass** zunächst alle Komponenten, die frei von Isocyanatgruppen sind, miteinander vermischt werden und Komponenten, die freie Isocyanatgruppen enthalten, erst unmittelbar vor der Applikation auf ein Substrat zugemischt werden.

7. Verwendung von Beschichtungsmitteln gemäß Ansprüchen 1 bis 5 zur Reparaturlackierung.

8. Verwendung von Beschichtungsmitteln gemäß Ansprüchen 1 bis 5 zur Großobjektlackierung.

9. Verwendung gemäß Anspruch 8, **dadurch gekennzeichnet, dass** es sich um Automobile, Flugzeuge, Schiffe und Schienenfahrzeuge handelt.

10. Substrate beschichtet mit mindestens einer Schicht erhältlich aus den Beschichtungsmitteln gemäß Ansprüchen 1 bis 5.

## Claims

1. Coating compositions curable by UV-A radiation and comprising at least one amorphous polyurethane which has a glass transition temperature of 35 to 100°C and a weight fraction of soft groups of less than 30% by weight, said compositions being curable, in addition to the photochemical crosslinking, by a further crosslinking mechanism, which in particular at temperatures below 60°C proceeds to an extensive completeness within eight hours such that even the unirradiated coating undergoes touch-dry curing,
**characterized in that** they comprise, as further components,
A1) at least one photoinitiator,
A2) optionally at least one compound which has at least one isocyanate-reactive group and optionally comprises one or more functional groups which react, with polymerization, with ethylenically unsaturated compounds on exposure to actinic radiation,
A3) optionally polyisocyanates, which optionally comprise one or more functional groups which react, with polymerization, with ethylenically unsaturated compounds on exposure to actinic radiation,
A4) optionally compounds which carry functional groups which react, with polymerization, with ethylenically unsaturated compounds on exposure to actinic radiation and which have neither isocyanate groups nor isocyanate-reactive groups,
A5) optionally catalysts and
A6) optionally auxiliaries and additives,
where at least one of components A2 to A4 and/or the amorphous polyurethane comprises or comprise one or more functional groups which react, with polymerization, with ethylenically unsaturated compounds on exposure to actinic radiation.

2. Coating compositions according to Claim 1, **characterized in that** the amorphous polyurethanes have a glass transition temperature of 40 to 76°C.

3. Coating compositions according to Claim 1, **characterized in that** the amorphous polyurethanes have a glass transition temperature of 40 to 52°C.

4. Coating compositions according to Claims 1 to 3, **characterized in that** the amorphous polyurethanes have a linear molecular structure.

5. Coating compositions according to Claims 1 to 4, **characterized in that** the further crosslinking mechanism is based on the isocyanate-hydroxyl reaction or the reaction of isocyanate with aminic components, or both types of reaction.

6. Process for preparing coating compositions according to Claims 1 to 5, **characterized in that** all of the components which are free of isocyanate groups are first of all mixed with one another, and components which comprise free isocyanate groups are admixed only immediately prior to application to a substrate.

7. Use of coating compositions according to Claims 1 to 5 for refinishing.

8. Use of coating compositions according to Claims 1 to 5 for large-object finishing.

9. Use according to Claim 8, **characterized in that** it is applied to automobiles, aircrafts, boats and rail vehicles.

10. Substrate coated with at least one coat obtainable from the coating compositions according to Claims 1 to 5.

## Revendications

1. Agents de revêtement durcissables par un rayonnement UV-A qui contiennent au moins un polyuréthane amorphe présentant une température de transition vitreuse de 35 à 100°C, qui présente une proportion pondérale de groupes souples inférieure à 30% en poids, et qui sont durcissables, outre par la réticulation photochimique, par un autre mécanisme de réticulation qui se déroule en particulier à des températures inférieures à 60°C en huit heures de manière tellement complète que même le revêtement non irradié durcit de manière à être sec au toucher, **caractérisés en ce qu'**ils contiennent comme autres composants
A1) au moins un photo-initiateur,
A2) le cas échéant au moins un composé qui présente au moins un groupe réactif avec isocyanate et le cas échéant un ou plusieurs groupes fonctionnels, qui réagit avec polymérisation sous l'effet d'un rayonnement actinique avec des composés éthyléniquement insaturés,
A3) le cas échéant des polyisocyanates, qui contiennent le cas échéant un ou plusieurs groupes fonctionnels, qui réagissent avec polymérisation sous l'effet d'un rayonnement actinique avec des composés éthyléniquement insaturés,
A4) le cas échéant des composés qui présentent des groupes fonctionnels qui réagissent avec polymérisation sous l'effet d'un rayonnement actinique avec des composés éthyléniquement insaturés et qui ne présentent pas de groupes isocyanate ni de groupes réactifs avec isocyanate,
A5) le cas échéant des catalyseurs et
A6) le cas échéant des adjuvants et des additifs au moins un des composants A2 à A4 et/ou le polyuréthane amorphe présentant un ou plusieurs groupes fonctionnels qui réagissent avec polymérisation sous l'effet d'un rayonnement actinique avec des composés éthyléniquement insaturés.

2. Agents de revêtement aqueux selon la revendication 1, **caractérisés en ce que** les polyuréthanes amorphes présentent une température de transition vitreuse de 40 à 76°C.

3. Agents de revêtement aqueux selon la revendication 1, **caractérisés en ce que** les polyuréthanes amorphes présentent une température de transition vitreuse de 40 à 52°C.

4. Agents de revêtement aqueux selon les revendications 1 à 3, **caractérisés en ce que** les polyuréthanes amorphes présentent une structure moléculaire linéaire.

5. Agents de revêtement aqueux selon les revendications 1 à 4, **caractérisés en ce que** l'autre mécanisme de réticulation repose sur la réaction isocyanate-hydroxyle ou la réaction d'isocyanate avec des composés de type amine ou sur les deux types de réaction en même temps.

6. Procédé pour la préparation d'agents de revêtement selon les revendications 1 à 5, **caractérisé en ce qu'**on mélange d'abord tous les composants qui sont exempts de groupes isocyanate les uns avec les autres et les composants qui contiennent des groupes isocyanate libres n'y sont mélangés que juste avant l'application sur un substrat.

7. Utilisation d'agents de revêtement selon les revendications 1 à 5 pour le laquage de réparation.

8. Utilisation d'agents de revêtement selon les revendications 1 à 5 pour le laquage de grands objets.

9. Utilisation selon la revendication 8, **caractérisée en ce qu'**il s'agit d'automobiles, d'avions, de bateaux et de véhicules ferroviaires.

10. Substrats revêtus par au moins une couche pouvant être obtenue à partir des agents de revêtement selon les revendications 1 à 5.
